# FASCICULE DE BREVET EUROPEEN

(11) **EP 3 934 310 B1**
(45) Date de publication et mention de la délivrance du brevet: **01.03.2023**
(21) Numéro de dépôt: 21181657.4
(22) Date de dépôt: 25.06.2021
(51) Int. Cl.: H04W 24/02, H04B 7/155, H04W 16/10, H04W 84/12

(54) **PROCEDE DE CONFIGURATION D'AU MOINS UNE RESSOURCE RADIO D'UN RESEAU DE COMMUNICATION, DISPOSITIF NOEUD, ET RESEAU DE COMMUNICATION**
VERFAHREN ZUR KONFIGURIERUNG MINDESTENS EINER FUNKRESSOURCE EINES KOMMUNIKATIONSNETZES, KNOTENVORRICHTUNG UND KOMMUNIKATIONSNETZ
METHOD FOR CONFIGURING AT LEAST ONE RADIO RESOURCE OF A COMMUNICATION NETWORK, NODE DEVICE AND COMMUNICATION NETWORK

(30) Priorité: 02.07.2020 FR 2007010
(43) Date de publication de la demande: 05.01.2022
(73) Titulaire: SAGEMCOM BROADBAND SAS, 92500 Rueil-Malmaison (FR)
(72) Inventeur: REUCHE, Anthony, 92500 RUEIL MALMAISON (FR)
(74) Mandataire: Cabinet Le Guen Maillet

(56) Documents cités:
- CN-A- 108 964 806
- US-A1- 2015 078 162
- Wi-Fi Alliance: "Wi-Fi CERTIFIED Data Elements", , 30 juin 2019 (2019-06-30), XP055785021, Extrait de l'Internet: URL:https://www.wi-fi.org/download.php?fil e=/sites/default/files/private/Wi-Fi_CERTI FIED_Data_Elements_Technology_Overview_0.p df [extrait le 2021-03-12]

## Description

### DOMAINE TECHNIQUE

Au moins un mode de réalisation concerne le domaine des réseaux de communication sans fil conformes à l'une des normes IEEE 802.11 (« Institute of Electrical and Electronics Engineers », en anglais), c'est-à-dire le domaine des réseaux de communication sans fil communément appelés réseaux « Wi-Fi ». Au moins un mode de réalisation concerne plus particulièrement un procédé de configuration d'une ou plusieurs ressources radio d'au moins un dispositif noeud de communication dans un tel réseau.

### ETAT DE LA TECHNIQUE ANTERIEURE

Un réseau de communication sans fil (ci-après « réseau ») conforme à l'une des normes IEEE 802.11 comprend typiquement une pluralité de noeuds. Chaque noeud est un dispositif électronique comprenant *a minima* un module radiofréquence permettant l'établissement de communications conformément à l'une des normes IEEE 802.11, ou dit autrement, conformément à l'une des normes Wi-Fi. Un tel réseau comprend typiquement un dispositif électronique, communément appelé point d'accès (« Access Point » en anglais, ou « AP ») et une pluralité de dispositifs électroniques dits utilisateurs (ou clients) pouvant établir des connexions sans fil avec le point d'accès et/ou entre elles. Dans un environnement résidentiel, le dispositif électronique, point d'accès, est typiquement une « box » fournie par un opérateur internet, c'est-à-dire une passerelle domestique (« home gateway », ou « residential gateway », en anglais). Les dispositifs électroniques utilisateurs sont typiquement des ordinateurs, télévisions, tablettes ou téléphones dits « intelligents » (« smartphone » en anglais). On dit ainsi communément que les dispositifs électroniques utilisateurs sont associés « en Wi-Fi » avec le point d'accès.

L'architecture d'un réseau Wi-Fi peut aussi être distribuée, afin par exemple d'étendre la portée du réseau ou d'augmenter ses performances, par l'utilisation d'une pluralité de dispositifs noeuds opérant des fonctionnalités de points d'accès sans fil. L'architecture d'un réseau Wi-Fi distribuée est différente de la précédente architecture succinctement décrite. Un réseau Wi-Fi, classique ou distribué, comprend au minimum deux sous-réseaux :
- un sous-réseau dit « de collecte », « d'infrastructure » ou encore « de cheminement » (« backhaul » en anglais), permettant de connecter les noeuds à la home gateway dans le cas d'un réseau Wi-Fi classique, ou permettant de relier les noeuds de communication entre eux et de constituer une infrastructure réseau suivant une architecture réseau (par exemple, en arbre, en étoile ou encore un réseau maillé « mesh », en anglais) ; ce réseau de collecte peut être un réseau sans-fil (par exemple Wi-Fi), filaire (par exemple Ethernet) ou un mélange des deux,
- un sous-réseau Wi-Fi dit « utilisateur » ou « frontal » (ou encore « client ») (« fronthaul » en anglais), permettant une connexion de dispositifs électroniques dits « utilisateurs » (ou « clients ») au réseau Wi-Fi distribué ou classique.

Le nombre de noeuds de communication d'un réseau distribué, tel que, par exemple un réseau présentant une architecture maillée, peut être important et la proximité de deux noeuds de communication ou points d'accès du sous-réseau d'acheminement risque de générer des perturbations dans les transmissions opérées par ces noeuds de communication ou points d'accès, et d'amoindrir en conséquence la performance globale du sous-réseau d'acheminement et donc la performance des accès au réseau par les dispositifs utilisateurs.

Le document Wi-Fi Alliance : « Wi-Fi CERTIFIED Data Elements » du 30 juin 2019 décrit une certification de l'alliance Wi-Fi (ou WiFi Alliance, marque déposée) qui fournit des indicateurs de données de performance de réseau Wi-Fi standardisés afin d'aider les fournisseurs de services à maintenir l'efficacité du réseau de manière efficace et proactive.

Des solutions existent et visent à opérer un balayage en fréquences (ou « scanning ») de sorte à analyser l'environnement électromagnétique d'un noeud et à sélectionner une bande de fréquences et un canal de transmission pas ou peu perturbé. La situation peut toutefois être améliorée.

### EXPOSE DE L'INVENTION

A cet effet, l'invention a pour objet un procédé de configuration de ressources radio réparties dans une pluralité de noeuds de communication d'un réseau de communication comprenant un sous-réseau d'acheminement dit « backhaul » et un sous-réseau utilisateurs dit « fronthaul », le sous-réseau fronthaul étant un réseau sans fil, chaque noeud de communication comprenant une ou plusieurs ressources radio, le procédé étant exécuté dans un noeud de communication dudit réseau de communication et comprenant :
- collecter, pour chacune desdites ressources radio, des paramètres de configuration, et au moins un paramètre représentatif d'un niveau de réception d'un signal émis ou reçu par cette ressource radio,
- détecter, à partir desdits paramètres de configuration de ressources radio collectés, et de l'un au moins desdits paramètres représentatifs d'un niveau de réception, une valeur de paramètre de configuration commune et une proximité entre une ressource radio d'un premier noeud de communication et une ressource radio d'un second noeud de communication parmi ladite pluralité de noeuds de communication, de nature à générer des perturbations dans les communications entre les premier et second noeuds de communication, ladite proximité étant détectée dès lors que le niveau de puissance en réception d'un signal émis par la ressource radio du premier noeud de communication et reçu par la ressource radio du second noeud de communication ou d'un signal émis par la ressource radio du second noeud de communication et reçu par la ressource radio du premier noeud de communication est supérieur à un seuil prédéterminé, lesdites ressources radio des premier et second noeuds de communication étant configurées pour opérer des transmissions par un lien sans-fil dans le sous-réseau d'acheminement dit backhaul,
- configurer au moins la ressource radio du second noeud de communication présentant une valeur commune de paramètre de configuration avec une nouvelle configuration, ladite valeur dudit paramètre de configuration commune étant absente de la nouvelle configuration et ladite seconde ressource radio étant configurée pour opérer des transmissions dans le sous-réseau fronthaul après ladite étape de configuration ,
- Détecter au moins un lien filaire entre les premier et second noeuds de communication susceptible de se substituer au lien sans fil pour des communications dans le sous-réseau d'acheminement backhaul de sorte que lesdites communications opérées par le lien sans fil entre les premiers et seconds noeuds de communication soient opérées par le lien filaire après l'étape de configuration.

Les termes « une valeur de paramètre de configuration commune » sont à interpréter ici comme une valeur numérique commune, comme par exemple un identifiant de sous-réseau, ou encore une valeur de chaîne alphanumérique, comme un identifiant alphanumérique, tel qu'un SSID ou un numéro de canal, par exemple.

Avantageusement, il est ainsi possible d'optimiser l'utilisation des ressources radio d'un même réseau, de sorte à pouvoir utiliser le plus grand nombre de ressources radio avec le moins de perturbations possible entre celles-ci.

Avantageusement, l'allocation des ressources radio peut être centralisée dans un noeud unique d'un réseau pour faciliter la détection de perturbations éventuelles. Avantageusement, il est ainsi possible d'optimiser les performances du sous-réseau d'acheminement backhaul tout en mettant plus de ressources radio à disposition du sous-réseau utilisateur fronthaul.

Le procédé selon l'invention peut également comporter les caractéristiques suivantes, considérées seules ou en combinaison :
- L'étape de détection d'au moins un lien filaire comprend un échange de messages entre les premier et second dispositifs noeuds via des interfaces configurées pour être raccordées par un lien filaire. Ainsi, il aisé de substituer un lien filaire déjà existant à une liaison sans fil, en cas de perturbations de communications relatives à cette liaison sans fil.
- Au moins un paramètre représentatif d'un niveau de réception est un niveau de puissance en réception dit RSSI d'un signal issu d'une antenne d'un noeud de communication.
- Au moins un paramètre de configuration présentant une valeur commune entre deux noeuds de communication est parmi le groupe : un SSID, un BSSID, une bande de fréquences, un canal, une bande passante. Avantageusement, il est ainsi possible de considérer des groupes de noeuds de communication dans le réseau de communication et d'analyser la performance individuelle et/ou collective de ces groupes de noeuds.

Un autre objet de l'invention est de proposer un dispositif noeud de communication configuré pour opérer des transmissions avec une pluralité de noeuds de communication d'un réseau de communication comprenant un sous-réseau d'acheminement dit « backhaul » et un sous-réseau utilisateurs dit « fronthaul », et pour configurer une ou plusieurs ressources radio réparties dans la pluralité de noeuds de communication, chaque dispositif noeud de communication comprenant une ou plusieurs ressources radio, le dispositif noeud de communication étant configuré pour :
- collecter, pour chacune desdites ressources radio, des paramètres de configuration, et au moins un paramètre représentatif d'un niveau de réception d'un signal émis ou reçu par cette ressource radio,
- détecter, à partir desdits paramètres de configuration de ressources radio collectés, et de l'un au moins desdits paramètres représentatifs d'un niveau de réception, une valeur de paramètre de configuration commune et une proximité entre une ressource radio d'un premier noeud de communication et une ressource radio d'un second noeud de communication parmi ladite pluralité de noeuds de communication, de nature à générer des perturbations dans les communications entre les premier et second noeuds de communication, ladite proximité étant détectée dès lors que le niveau de puissance en réception d'un signal émis par la ressource radio du premier noeud de communication et reçu par la ressource radio du second noeud de communication ou d'un signal émis par la ressource radio du second noeud de communication et reçu par la ressource radio du premier noeud de communication est supérieur à un seuil prédéterminé, lesdites ressources radio des premier et second noeuds de communication étant configurées pour opérer des transmissions par un lien sans-fil dans le sous-réseau d'acheminement dit backhaul,
- configurer au moins une ressource radio du second noeud de communication avec une nouvelle configuration, ladite valeur commune dudit paramètre de configuration étant absente de la nouvelle configuration et ladite seconde ressource radio étant configurée pour opérer des transmissions dans le sous-réseau fronthaul après ladite étape de configuration,
- Détecter au moins un lien filaire susceptible de se substituer au lien sans fil pour des communications dans le sous-réseau d'acheminement backhaul entre les premier et second noeuds de communication de sorte que lesdites communications opérées par le lien sans fil
entre les premiers et seconds noeuds de communication soient opérées par le lien filaire après l'étape de configuration.

L'invention a également pour objet un réseau de communication comprenant une pluralité de dispositifs noeuds tel que précité.

L'invention concerne de plus un produit programme d'ordinateur comprenant des instructions de codes de programme pour exécuter les étapes du procédé précédemment décrit lorsque le programme est exécuté par un processeur d'un noeud de communication, ainsi qu'un support de stockage d'informations comprenant un tel produit programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre un réseau de communication comprenant une pluralité de noeuds de communication dans lequel au moins un noeud de communication est configuré pour opérer une configuration d'au moins une ressource radio en exécutant un procédé selon l'invention ;
[Fig. 2] illustre le réseau de communication déjà représenté sur la Fig. 1, après reconfiguration d'une ressource radio grâce au procédé de configuration d'au moins une ressource radio du réseau de communication ;
[Fig. 3] est un ordinogramme illustrant les étapes d'un procédé de configuration d'une ressource radio du réseau de communication représenté sur les Fig. 1 et Fig. 2 ;
[Fig. 4] est une représentation schématique d'un noeud de communication du réseau de communication représenté sur les Fig. 1 et Fig. 2.

### EXPOSE DETAILLE DE MODES DE REALISATION

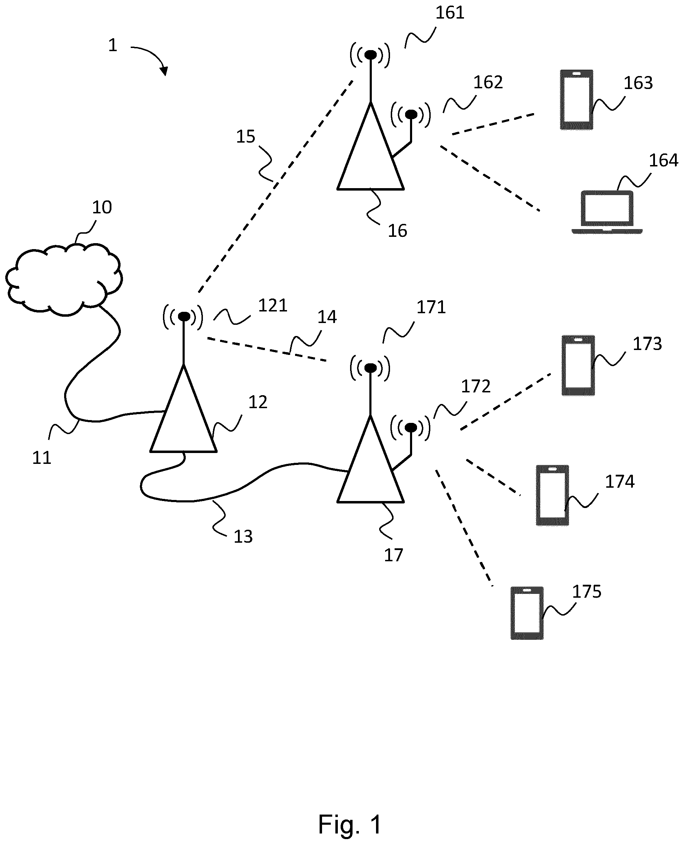

La **Fig. 1** illustre schématiquement un réseau de communication 1 de type réseau local comprenant un système d'extension de couverture de communication sans-fil. Par exemple, le réseau de communication 1 est un réseau domestique. Le réseau de communication 1 est connecté à un réseau étendu 10. Selon un mode de réalisation, le réseau étendu 10 est le réseau internet. Le réseau de communication 1 est connecté au réseau étendu 10 grâce à une passerelle réseau 12 configurée pour implémenter l'ensemble des fonctions utiles à une connexion entre un réseau étendu et un réseau local. La passerelle réseau 12, encore communément appelée « gateway » est connectée au réseau étendu 10 par l'intermédiaire d'un lien de connexion 11. Le lien de connexion 11 est, par exemple, une ligne d'abonné au téléphone, et la connexion utilise par exemple une technologie ADSL (sigle anglais pour « Asymmetric Digital Subscriber Line » et qui signifie « ligne d'abonné numérique et asymétrique »). Dans un autre exemple, le lien de connexion 11 appartient à un réseau d'acheminement de données par voies optiques, tel qu'un réseau fibre optique jusqu'à domicile ou Fiber To The Home « FTTH » en anglais. La passerelle réseau 12 comprend une ressource radio 121 et une interface filaire Ethernet (non représentée sur la figure) pour une connexion à un réseau local, et opère des fonctions de noeud de communication. Le réseau de communication 1 comprend en outre deux autres noeuds de communication 16 et 17. Selon un mode de réalisation, le noeud de communication 17 est un dispositif électronique de type récepteur-décodeur de télévision numérique communément appelé « set-top box », qui comprend lui aussi une interface de connexion Ethernet (non représentée sur la figure), pour une connexion à un réseau local, et le noeud de communication 16 est un répéteur de réseau local sans fil se présentant sous la forme d'une borne relais WiFi pour un réseau de communication local sans fil. Le noeud de communication 17 comprend deux ressources radio 171 et 172 et le noeud de communication 16 comprend deux ressources radio 161 et 162. Les noeuds de communication 16 et 17 sont configurés pour des communications avec la passerelle réseau 12 et constituent un sous réseau d'acheminement « backhaul » du réseau de communication 1. Des dispositifs électroniques dits dispositifs « utilisateurs » 163, 164, 173, 174 et 175 sont connectés au réseau de communication 1 par le biais des ressources radio des noeuds de communication 16 et 17. Les dispositifs utilisateurs 163 et 164 sont connectés au réseau de communication 1 par l'intermédiaire de la ressource radio 162 du noeud de communication 16 et les dispositifs utilisateurs 173, 174 et 175 sont connectés au réseau de communication 1 par l'intermédiaire de la ressource radio 172 du noeud de communication 17. Selon un mode de réalisation, les dispositifs utilisateurs 163, 173, 174 et 175 sont des dispositifs téléphones intelligents encore communément appelés smartphones et le dispositif utilisateur 164 est un ordinateur portable encore communément appelé laptop. Les liaisons entre les noeuds de communication 16 et 17 et les dispositifs utilisateurs 163, 164, 173, 174 et 175 constituent un sous-réseau utilisateur dit sous-réseau « frontal » ou « fronthaul » du réseau de communication 1. Selon un mode de réalisation, tous les noeuds de communication du réseau local 1, à savoir la passerelle réseau 12, la set-top box 17 et la borne relais 16, ainsi que les dispositifs utilisateurs 163, 164, 173, 174 et 175 sont configurés pour opérer des communications sans fil selon des caractéristiques et protocoles conformément à l'une des normes IEEE 802.11.

Selon un mode de réalisation, le réseau de communication 1 est un réseau distribué tel qu'un réseau Wi-Fi maillé par exemple, le noeud de communication 12 réalisant en outre la fonctionnalité de « noeud maître ».

Selon un autre mode de réalisation, le réseau de communication 1 est un réseau de type réseau Wi-Fi classique dans lequel les dispositifs utilisateurs 163, 164, 173, 174, 175 ainsi que le noeud de communication 17 sont connectés au réseau de communication 1 par le biais des ressources radio du noeud de communication 12.

Dans l'exemple décrit sur la Fig. 1, un lien filaire 13 de type Ethernet existe entre le noeud de communication 12 et le noeud de communication 17. Il est par exemple fréquent de connecter par un lien filaire de type Ethernet deux dispositifs noeuds lors d'une installation d'équipements réseau. C'est particulièrement vrai lorsqu'un utilisateur connecte un équipement de type set-top box, tel que le dispositif noeud de communication 17 à un équipement de type gateway, tel que la passerelle réseau 12. En effet, il apparaît courant, dans le cadre d'un réseau local domestique et pour un utilisateur parfois néophyte en matière de réseaux de communication, d'opérer en un premier temps via une liaison filaire, puis de configurer une ou plusieurs connexions sans fil entre des équipements, pour s'assurer progressivement du bon fonctionnement des équipements interconnectés tout au long de l'installation. Ainsi, il n'est pas rare que dans un réseau local domestique tel que le réseau de communication 1 décrit dans le présent exemple, une connexion filaire subsiste, bien qu'une connexion sans fil ait ensuite été établie entre deux équipements du réseau de communication. S'agissant de l'agencement des équipements d'un même réseau de communication, il n'est pas rare en outre que deux équipements, ou plus, soient disposés proches les uns des autres, voire même empilés, de sorte à en limiter l'encombrement. Or, comme de nombreux équipements réseau opérant des fonctions de noeud de communication comprennent désormais souvent une ou plusieurs ressources radio, une grande proximité ou un agencement sous la forme d'un empilement est de nature à créer des perturbations entre ces ressources radio. Ces perturbations sont alors préjudiciables à la performance globale d'un réseau de communication, et particulièrement aux performances du sous-réseau d'acheminement, dans un contexte comme celui décrit par la Fig. 1.

Dans un autre exemple, le lien filaire 13 est un lien utilisant une technologie de type courants porteurs en ligne ou « CPL », ce lien étant constitué de câbles ou cordons électriques ou de portions de câbles ou cordons électriques, et étant adapté pour réaliser une connexion fiable de transport de données entre le noeud de communication 12 et le noeud de communication 17.

Selon un mode de réalisation, un procédé de configuration des ressources radio permet avantageusement de détecter une proximité entre des ressources radio de deux noeuds de communication et de reprogrammer l'un ou l'autre de ces deux noeuds de communication de sorte à optimiser les performances globales du réseau. Ainsi, il est possible d'utiliser un grand nombre de ressources radio en minimisant le risque de perturbations entre ces ressources.

Avantageusement, un procédé de configuration, ou plus exactement de reconfiguration selon l'invention permet de collecter des informations concernant la configuration de chacune des ressources radio d'un réseau de communication tel que le réseau de communication illustré sur la Fig. 1 et de détecter, à partir des informations collectées, une proximité entre deux ressources radio, laquelle proximité est de nature à entraîner des perturbations dans les communications entre ces deux équipements.

Ainsi, il est avantageusement possible, par exemple, d'utiliser un lien filaire présent entre deux équipements proches d'un sous-réseau backhaul pour opérer des communications entre eux, et de reconfigurer une ressource radio opérant dans le sous-réseau d'acheminement backhaul, de sorte que cette ressource radio soit mise à profit d'un sous-réseau fronthaul connecté au sous-réseau backhaul, facilitant ainsi une connexion de qualité pour des dispositifs utilisateurs connectés au sous-réseau fronthaul.

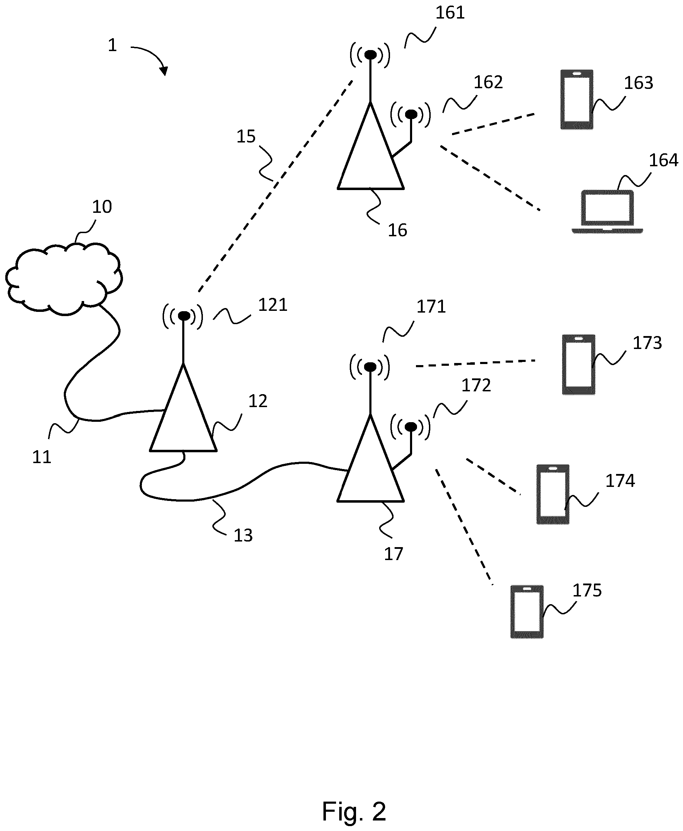

La **Fig. 2** illustre un exemple de configuration, ou plus exactement de reconfiguration du réseau de communication 1 par le procédé de configuration de ressources radio selon l'invention. Avantageusement, l'exécution du procédé permet de détecter la présence du lien filaire 13 entre les noeuds de communication 12 et 17, susceptible de se substituer au lien sans fil 14, pour des communications dans le sous-réseau d'acheminement comprenant les noeuds de communication 12, 16 et 17. La détection d'une proximité entre deux ressources radio, de nature à générer des perturbations entre ces deux noeuds, peut être réalisée en collectant des informations, telles que des paramètres de configuration, relatives à ces ressources radio. La collecte de paramètres de configuration peut être réalisée de plusieurs façons. Selon un mode de réalisation, la collecte d'informations peut être réalisée en opérant un balayage en fréquence ou « scanning » à partir d'une ressource radio d'un noeud de communication puis en analysant les signaux en réception issus des autres ressources radio. Ainsi, une ressource radio d'un noeud de communication peut être configurée successivement, pour chacune des fréquences auxquelles elle peut être configurée pour opérer des transmissions, de sorte à analyser les signaux radioélectriques reçus pour ces configurations successives, ainsi que la puissance du signal reçu. Ainsi, le procédé selon l'invention permet avantageusement de détecter une grande proximité entre les noeuds de communication 12 et 17, lorsque la passerelle réseau 12 et la set-top box 17 sont superposées. Le procédé selon l'invention permet en outre de détecter la présence du lien filaire 13, de sorte que des communications opérées par le lien sans fil 14 entre les noeuds de communication 12 et 17 soient opérées par le lien filaire 13 après reconfiguration, ce qui permet avantageusement de reprogrammer la ressource radio 171 pour un usage dans le sous-réseau fronthaul, et donc pour la connexion d'un dispositif utilisateur. La Fig. 2 illustre une connexion du dispositif utilisateur 173 au réseau de communication 1 via la ressource radio 171 de la set-top box 17, après reconfiguration de celle-ci. Cette réaffectation de la ressource radio 171 au profit du sous-réseau fronthaul est particulièrement intéressante dans la mesure où il apparaît que l'amélioration de la performance globale d'un réseau de communication passe le plus souvent par une amélioration des performances du sous-réseau d'acheminement backhaul.

Selon un mode de réalisation, la collecte des paramètres de configuration des différentes ressources radio n'est pas effectuée lors d'un balayage en fréquence, mais selon des échanges protocolaires implémentés entre les différents noeuds de communication du réseau de communication 1. Par exemple, un noeud de communication déterminé peut adresser une requête à tout ou partie des autres noeuds de communication, la requête visant à obtenir des informations représentatives du fonctionnement de chacune des ressources radio, soit, par exemple, le canal de fonctionnement, le SSID utilisé, le BSSID utilisé, et le niveau en réception du signal émis par la ressource radio utilisée pour l'émission de la requête. Selon un mode de réalisation, chacune des ressources radio interrogées, c'est-à-dire ayant reçu une telle requête, envoie des informations à la ressource radio émettrice, ou plus exactement au noeud de communication émetteur, selon un format prédéterminé.

Avantageusement, la collecte de l'ensemble des paramètres de configuration reçus et les informations représentatives du niveau de signal reçu par les différentes ressources radio permettent de faire une analyse de la situation globale (ou collective) des ressources radio et une reconfiguration intelligente d'une ou plusieurs de ces ressources.

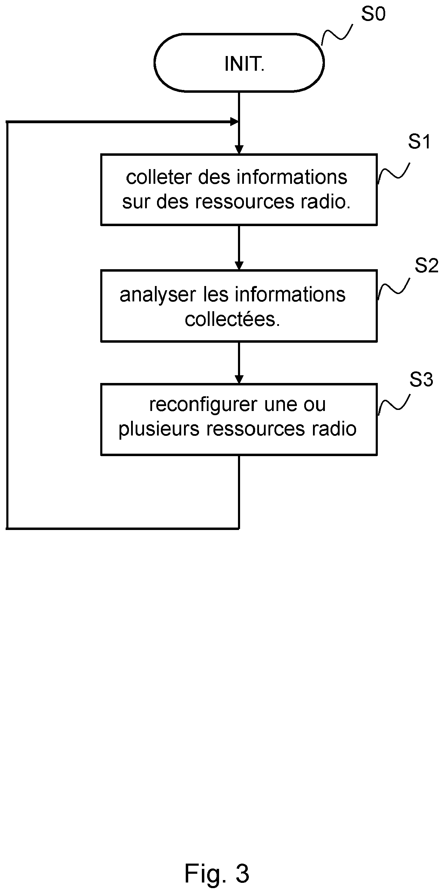

La **Fig.3** illustre un procédé de configuration d'au moins une ressource radio du réseau de communication 1 selon un mode de réalisation dans lequel le procédé est exécuté dans le noeud de communication gateway 12. Une première étape **S0** est une étape d'initialisation au terme de laquelle le réseau de communication 1 est normalement opérationnel dans la configuration représentée sur la Fig. 1. Au terme de cette étape S0, les dispositifs noeuds 12, 16 et 17 coopèrent à l'implémentation des fonctions du sous-réseau d'acheminement backhaul, outre les autres fonctions spécifiques telles que des fonctions propres à la passerelle réseau 12 (démodulation de signaux, contrôle d'accès, routage, sécurité, par exemple) ou encore les fonctions de la set-top box 17 (réception de données audiovisuelles, démultiplexage, décodage et restitution de programmes audios et vidéos). Le dispositif relais de communication 16 opère quant à lui ses fonctions de relais entre la gateway 12 et les dispositifs utilisateurs qui sont connectés à sa ressource radio 162.

Lors d'une étape **S1**, le dispositif noeud 12 initie une collecte de données de tout ou partie des ressources radio du réseau de communication qui lui sont accessibles. Par exemple, le dispositif noeud de communication 12 configure sa ressource radio 121 pour scruter successivement en réception l'ensemble des canaux pour lesquels il peut être programmé. Le dispositif noeud 12 procède, pour chacun des canaux successivement programmés à un enregistrement d'informations représentatives de l'environnement électromagnétique issu des autres ressources radio du réseau de communication 1, dont notamment des paramètres de configurations tels que les SSID transmis, les BSSID transmis, la bande de fréquences dans laquelle se situe le canal observé, ainsi que le niveau du signal reçu pour chacune des ressources radio visibles et scrutées, et le niveau de bruit sur le canal.

A une étape **S2**, le dispositif noeud 12 opère une analyse des paramètres de configuration ainsi collectés, et d'au moins un paramètre représentatif d'un niveau de réception d'un signal émis par les ressources radio. Selon un mode de réalisation, le paramètre représentatif d'un niveau de réception par une ressource radio est le « Received Signal Strength Indicator » ou « RSSI ». Ainsi, selon l'exemple décrit sur la Fig. 1, le dispositif noeud de communication 12, qui exécute le procédé, détecte, par exemple, que la ressource radio 171 émet avec une valeur de SSID commune avec sa propre ressource radio 121, c'est-à-dire que les ressources radio 121 et 171 participent à la couverture d'un même réseau local. En d'autres termes, le noeud de communication 17 appartient à un même groupe de noeuds de communication que le noeud de communication 12, à savoir le sous-réseau d'acheminement backhaul du réseau de communication 1. De plus, la puissance du signal émis par la ressource radio 171, vue depuis la ressource radio 121, indique une grande proximité entre les deux ressources radio (par exemple avec un RSSI lu supérieur à - 25dBm), de nature à perturber les communications à partir de l'un, de l'autre ou des deux noeuds de communication 12 et 17. En outre, il n'est pas avantageux de disposer de deux ressources radio présentant les mêmes caractéristiques à un même endroit et une distanciation entre ces ressources radio serait utile à l'extension de la couverture du réseau en l'absence de reconfiguration.

Selon une variante, le noeud de communication 12 n'opère pas la collecte des paramètres de configuration et des niveaux de réception de signaux en procédant par un balayage en fréquence, mais en adressant des requêtes aux noeuds de communication accessibles, tels que les noeuds de communication 16 et 17, par exemple ; ces requêtes étant définies selon un protocole prédéterminé et visant à solliciter l'envoi des paramètres de configuration et de niveaux de réception du signal émis par le noeud de communication 12, vu par chacune des ressources radio. Ces informations peuvent, par exemple, être procurées par les circuits internes d'une ressource radio (chipset radio). Selon cette variante, chacun des noeuds de communication 16 et 17 envoie les informations demandées au noeud de communication 12, en réponse à la requête émise par celui-ci. Toujours à l'étape S2, et lorsqu'une grande proximité entre deux ressources radio voisines, de nature à entraîner des perturbations, est détectée, un test de connexion est réalisé en vue de déterminer si les noeuds de communication dont la proximité est préjudiciable aux performances globales du réseau de communication, sont interconnectés par un lien filaire. Ainsi, dans l'exemple cité et illustré sur la Fig. 1, les équipements constituant les noeuds de communication 12 et 17 sont physiquement superposés, et les ressources radio 121 et 171 se perturbent mutuellement de sorte que des problèmes de stabilité peuvent apparaître dans les communications depuis ou vers ces ressources radio.

Lorsqu'une trop grande proximité est ainsi détectée entre deux ressources radio, et donc entre deux noeuds de communication, et qu'une liaison filaire existe entre ces deux noeuds, une nouvelle configuration de l'une au moins de ces ressources radio voisines est réalisée. Selon un mode de réalisation, la nouvelle configuration est telle que le lien filaire est utilisé pour la communication entre les deux dispositifs noeuds voisins affichant une grande proximité, et la ressource radio reprogrammée est mise à profit autrement que selon la configuration initiale. Par exemple, une ressource radio affectée au fonctionnement du sous-réseau d'acheminement backhaul dans une configuration donnée peut être affectée au sous-réseau utilisateurs fronthaul dans une nouvelle configuration. Ainsi, si le SSID présenté par la ressource radio 121 est identique au SSID présenté par la ressource radio 171, il est considéré que ces deux ressources radio présentent une valeur commune de leur paramètre de configuration qu'est le SSID. Selon d'autres exemples, une valeur commune de paramètre de configuration détectée peut être un BSSID, une bande passante, un canal, cette liste n'étant pas exhaustive.

Selon l'exemple cité, la ressource radio 171 du noeud de communication 17, initialement utilisée pour des communications dans le sous-réseau d'acheminement backhaul du réseau de communication 1, est reconfigurée pour être mise à profit dans le sous-réseau frontal du réseau de communication 1. Les communications du sous-réseau d'acheminement entre le noeud de communication 12 et le noeud de communication 17 sont alors réalisées au moyen de la connexion filaire 13. Cette nouvelle configuration, illustrée sur la Fig. 2, permet une connexion de dispositifs utilisateurs, tels que le dispositif utilisateur 173, au réseau de communication 1 via la ressource radio 171 du noeud de communication 17. Il est donc considéré que la nouvelle configuration de la ressource radio reconfigurée ne comprend pas la valeur de paramètre de configuration qui était commune avec une autre ressource radio avant reconfiguration, ou que, en d'autres termes, la valeur commune d'un paramètre de configuration entre deux ressources radio détectées comme étant positionnées très proches l'une de l'autre est absente de la nouvelle configuration pour éviter de possibles perturbations. Par exemple, si deux ressources radio très proches opèrent sur un même canal, identifié par un numéro de canal (par exemple le canal « 6 »), cette valeur commune sera absente de la nouvelle configuration pour la remplacer par une autre valeur du paramètre de configuration correspondant, ici par exemple le canal « 11 ». Selon un même raisonnement, la valeur de paramètre de configuration détectée comme étant commune peut être un identifiant de sous-réseau (par exemple égal à 0 pour le sous-réseau d'acheminement backhaul et à 1 pour le sous-réseau utilisateurs fronthaul). Ainsi, si avant l'étape de reconfiguration, les deux ressources radio opèrent dans le sous-réseau d'acheminement backhaul, et que l'une d'elle est reconfigurée pour opérer dans le sous-réseau utilisateurs fronthaul, la valeur commune 0 d'identifiant de sous-réseau est absente de la nouvelle configuration de la ressource radio nouvellement affectée au sous-réseau utilisateurs fronthaul. Le paramètre qu'est l'identifiant de sous-réseau prend la valeur 1 pour la ressource radio reconfigurée. Selon un autre exemple encore, si la valeur commune d'un paramètre de configuration détectée est un SSID, par exemple « réseau maison », ce SSID ne sera pas présent dans la nouvelle configuration et pourra, à titre d'exemple, être remplacé par un SSID différent, tel que « réseau salon ».

Selon un autre exemple de reconfiguration, lorsque la proximité de la ressource radio 121 et de la ressource radio 171 est détectée, et que les communications du sous-réseau d'acheminement entre le noeud de communication 12 et le noeud de communication 17 sont alors réalisées au moyen de la connexion filaire 13, la ressource radio 171 est désactivée s'il n'est pas possible de coordonner sa reconfiguration au profit du sous-réseau frontal du réseau de communication 1. Cette impossibilité peut se présenter s'il existe un risque que la reconfiguration de la ressource radio 171 perturbe la ressource radio 172.

Selon un mode de réalisation, le test de connexion filaire entre deux dispositifs noeuds est réalisé par un échange de messages protocolaires entre ces deux dispositifs noeuds, par exemple, en adressant une commande « ping » prévue pour tester la disponibilité d'un équipement au travers d'un réseau en adressant des commandes d'échos à destination d'une adresse IP prédéterminée ou d'un nom d'hôte prédéterminé.

Selon un mode de réalisation, l'étape S1 de collecte de paramètres et d'informations relatives aux ressources radio ne concerne que des équipements pour lesquels il peut être considéré que ces équipements présentent habituellement le risque d'être physiquement disposés proches l'un de l'autre, du fait de leurs fonctions respectives dans le réseau de communication 1. Par exemple, l'étape S1 de collecte peut ne concerner que des noeuds de communication de type gateway et set-top box, ou encore de type gateway et imprimante. Selon cette variante, le type ou la fonction de chacun des équipements est déterminé lors d'une opération d'installation ou encore en fonction d'un identifiant de l'équipement, tel que son adresse MAC, par exemple.

Selon un mode de réalisation, une proximité de nature à générer des perturbations dans des communications entre une ressource radio d'un premier noeud de communication et une ressource radio d'un second noeud de communication est détectée dès lors que le RSSI d'un signal émis par la ressource radio du premier noeud de communication et reçu par la ressource radio du second noeud de communication est supérieur à un seuil prédéterminé, ou vice versa. Selon un mode de réalisation, ce seuil est compris dans un intervalle de valeurs allant de -40 dBm à -25 dBm, préférentiellement, ce seuil est compris entre -30 dBm et -25 dBm, encore plus préférentiellement, ce seuil est égal à -25 dBm.

Selon un mode de réalisation, le procédé est exécuté dans un noeud de communication dit « noeud maître » du réseau de communication 1. Le noeud maître supervise les opérations de collecte, d'analyse et de configuration précitées. Selon une variante, le procédé est exécuté par un dispositif distant configuré pour communiquer avec les noeuds de communication du réseau de communication 1. Par exemple, un tel dispositif distant peut être compris dans le réseau étendu 10 et mis à disposition par un prestataire de services d'administration de réseaux de communication.

Selon un mode de réalisation, lorsqu'il est estimé que deux noeuds de communication sont suffisamment proches pour que leur proximité soit considérée comme de nature à engendrer des perturbations dans leur fonctionnement, le procédé peut être exécuté par l'un, premier de ces deux noeuds de communication, par l'autre, second de ces deux noeuds de communication ou encore par un noeud de communication tiers. Dans ce dernier cas, le niveau de réception du signal permettant de détecter une grande proximité est sensiblement identique lorsque la puissance du signal mesurée est celle du signal émis par le premier noeud de communication et lorsque la puissance du signal mesurée est celle du signal émis par le second noeud de communication. Ainsi, par exemple, si la set-top box 17 est positionnée empilée au-dessus de la gateway 12, il est fort probable que le niveau du signal émis par la ressource radio 121 de la gateway 12 apparaisse légèrement plus faible que le niveau du signal émis par la ressource radio 171 de la set-top box 17 lorsque la mesure est réalisée depuis la ressource radio 161 du noeud de communication 16, bien que les deux niveaux du signal en réception par la ressource radio 161 soient sensiblement du même ordre de grandeur.

Selon un mode de réalisation, tous les noeuds de communication du réseau de communication sont configurés pour échanger des informations représentatives de leurs configurations respectives avec d'autres noeuds de communication selon un protocole commun prédéterminé. Un tel protocole n'est pas décrit ici plus en détails dans la mesure où sa description n'est pas nécessaire à la compréhension de l'invention.

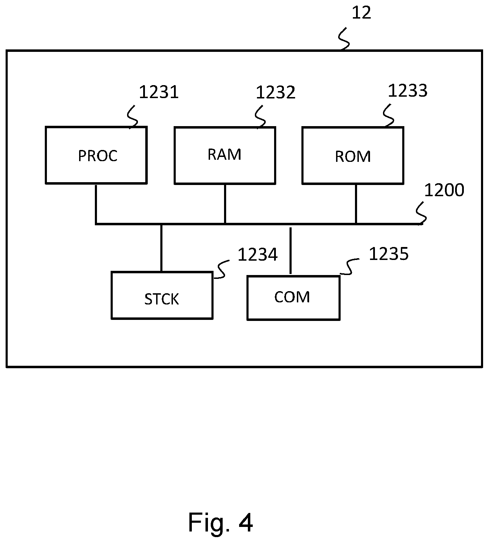

La **Fig. 4** illustre schématiquement un exemple d'architecture interne de tout dispositif noeud de communication du réseau de communication 1. Considérons à titre illustratif que la Fig. 4 illustre un agencement interne du dispositif noeud de communication 12. On note que la Fig. 4 pourrait aussi illustrer schématiquement un exemple d'architecture matérielle d'un module de traitement compris dans le dispositif noeud de communication 12, tel qu'une circuiterie de collecte et d'analyse de paramètres de ressources radio ou d'informations afférentes au fonctionnement d'une ou plusieurs ressources radio du réseau de communication 1.

Selon l'exemple d'architecture matérielle représenté à la Fig. 4, le dispositif noeud de communication 12 comprend alors, reliés par un bus de communication 1200 : un processeur ou CPU (« Central Processing Unit » en anglais) 1231 ; une mémoire vive RAM (« Random Access Memory » en anglais) 1232 ; une mémoire morte ROM (« Read Only Memory » en anglais) 1233 ; une unité de stockage telle qu'un disque dur (ou un lecteur de support de stockage, tel qu'un lecteur de cartes SD (« Secure Digital » en anglais) 1234 ; au moins une interface de communication 1235 permettant au dispositif noeud de communication 12 de communiquer avec les autres dispositifs noeuds du réseau de communication 1, tels que par exemple, les dispositifs noeuds 16 et 17.

Le processeur 1201 est capable d'exécuter des instructions chargées dans la RAM 1232 à partir de la ROM 1233, d'une mémoire externe (non représentée), d'un support de stockage (tel qu'une carte SD), ou d'un réseau de communication. Lorsque le dispositif noeud de communication 12 est mis sous tension, le processeur 1231 est capable de lire de la RAM 1232 des instructions et de les exécuter. Ces instructions forment un programme d'ordinateur causant la mise en oeuvre, par le processeur 1231, de tout ou partie du procédé décrit en relation avec la Fig. 3.

Tout ou partie du procédé décrit en relation avec la Fig. 3 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif noeud de communication 12 comprend de la circuiterie électronique configurée pour mettre en oeuvre les procédés décrits en relation avec le dispositif noeud de communication 12 (de même pour les dispositifs noeuds de communication 16 et 17). Bien évidemment le dispositif noeud de communication 12 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus. Cette liste étant non exhaustive.

## Revendications

1. Procédé de configuration de ressources radio (121, 161, 162, 171, 172) réparties dans une pluralité de noeuds de communication (12, 16, 17) d'un réseau de communication (1) comprenant un sous-réseau d'acheminement dit « backhaul » et un sous-réseau utilisateurs dit « fronthaul », le sous-réseau fronthaul étant un réseau sans fil, chaque noeud de communication (12, 16, 17) comprenant une ou plusieurs ressources radio (121, 161, 162, 171, 172), le procédé étant exécuté dans un noeud de communication (12, 16, 17) dudit réseau de communication, et étant **caractérisé en ce qu'**il comprend :
- Collecter (S1), pour chacune desdites ressources radio (121, 161, 162, 171, 172), des paramètres de configuration, et au moins un paramètre représentatif d'un niveau de réception d'un signal émis ou reçu par cette ressource radio,
- Détecter (S2), à partir desdits paramètres de configuration de ressources radio collectés, et de l'un au moins desdits paramètres représentatifs d'un niveau de réception, une valeur de paramètre de configuration commune et une proximité entre une ressource radio (121) d'un premier noeud de communication (12) et une ressource radio (171) d'un second noeud de communication (17) parmi ladite pluralité de noeuds de communication (12, 16, 17), de nature à générer des perturbations dans les communications entre les premier (12) et second (17) noeuds de communication (12, 16, 17), ladite proximité étant détectée dès lors que le niveau de puissance en réception d'un signal émis par la ressource radio du premier noeud de communication et reçu par la ressource radio du second noeud de communication ou d'un signal émis par la ressource radio du second noeud de communication et reçu par la ressource radio du premier noeud de communication est supérieur à un seuil prédéterminé, lesdites ressources radio (121, 171) des premier (12) et second (17) noeuds de communication étant configurées pour opérer des transmissions par un lien sans-fil (14) dans le sous-réseau d'acheminement dit backhaul,
- Configurer (S3) au moins la ressource radio du second noeud de communication (17) présentant une valeur commune de paramètre de configuration avec une nouvelle configuration, ladite valeur dudit paramètre de configuration commune étant absente de la nouvelle configuration et ladite seconde ressource radio (171) étant configurée pour opérer des transmissions dans le sous-réseau fronthaul après ladite étape de configuration (S3),
- Détecter au moins un lien filaire (13) entre les premier (12) et second (17) noeuds de communication susceptible de se substituer au lien sans fil (14) pour des communications dans le sous-réseau d'acheminement backhaul de sorte que lesdites communications opérées par le lien sans fil (14) entre les premiers (12) et seconds (17) noeuds de communication soient opérées par le lien filaire (13) après l'étape de configuration (S3).

2. Procédé de configuration de ressources radio (121, 161, 162, 171, 172) selon la revendication précédente, dans lequel l'étape de détection d'un lien filaire (13) comprend un échange de messages entre les premier (12) et second (17) dispositifs noeuds via des interfaces configurées pour être raccordées par au moins un lien filaire (13).

3. Procédé de configuration de ressources radio (121, 161, 162, 171, 172) selon l'une quelconque des revendications précédentes, dans lequel le au moins un paramètre représentatif d'un niveau de réception est un niveau de puissance en réception dit RSSI d'un signal issu d'une antenne d'un noeud de communication.

4. Procédé de configuration de ressources radio (121, 161, 162, 171, 172) selon l'une quelconque des revendications précédentes, dans lequel le au moins un paramètre de configuration présentant une valeur commune entre deux noeuds de communication est parmi le groupe : un SSID, un BSSID, une bande de fréquences, un canal, une bande passante.

5. Dispositif noeud de communication (12, 16, 17) configuré pour opérer des transmissions avec une pluralité de noeuds de communication (12, 16, 17) d'un réseau de communication (1) comprenant un sous-réseau d'acheminement dit « backhaul » et un sous-réseau utilisateurs dit « fronthaul », le sous-réseau fronthaul étant un réseau sans fil, et pour configurer une ou plusieurs ressources radio (121, 161, 162, 171, 172) réparties dans ladite pluralité de noeuds de communication (12, 16, 17), chaque dispositif noeud de communication (12, 16, 17) comprenant une ou plusieurs ressources radio, le dispositif noeud de communication (12, 16, 17) étant configuré pour :
- Collecter (S1), pour chacune desdites ressources radio (121, 161, 162, 171, 172), des paramètres de configuration, et au moins un paramètre représentatif d'un niveau de réception d'un signal émis ou reçu par cette ressource radio,
- Détecter (S2), à partir desdits paramètres de configuration de ressources radio collectés, et de l'un au moins desdits paramètres représentatifs d'un niveau de réception, une valeur de paramètre de configuration commune et une proximité entre une ressource radio (121, 161, 162, 171, 172) d'un premier noeud de communication (12,) et une ressource radio (121, 161, 162, 171, 172) d'un second noeud de communication (17) parmi ladite pluralité de noeuds de communication (12, 16, 17), de nature à générer des perturbations dans les communications entre les premier et second noeuds de communication (12, 16, 17), ladite proximité étant détectée dès lors que le niveau de puissance en réception d'un signal émis par la ressource radio du premier noeud de communication et reçu par la ressource radio du second noeud de communication ou d'un signal émis par la ressource radio du second noeud de communication et reçu par la ressource radio du premier noeud de communication est supérieur à un seuil prédéterminé, lesdites ressources radio (121, 171) des premier (12) et second (17) noeuds de communication étant configurées pour opérer des transmissions par un lien sans-fil (14) dans le sous-réseau d'acheminement dit backhaul,
- configurer (S3) au moins une ressource radio (121, 161, 162, 171, 172) du second noeud de communication avec une nouvelle configuration, ladite valeur commune dudit paramètre de configuration étant absente de la nouvelle configuration et ladite seconde ressource radio (171) étant configurée pour opérer des transmissions dans le sous-réseau fronthaul après ladite étape de configuration (S3),
- Détecter au moins un lien filaire (13) susceptible de se substituer au lien sans fil (14) pour des communications dans le sous-réseau d'acheminement backhaul entre les premier (12) et second (17) noeuds de communication de sorte que lesdites communications opérées par le lien sans fil (14) entre les premiers (12) et seconds (17) noeuds de communication soient opérées par le lien filaire (13) après l'étape de configuration (S3).

6. Réseau de communication (1) sans fil comprenant une pluralité de noeuds de communication (12, 16, 17) selon la revendication 5.

7. Produit programme d'ordinateur **caractérisé en ce qu'**il comprend des instructions de codes de programme pour exécuter les étapes du procédé selon l'une quelconque des revendications 1 à 4, lorsque ledit programme est exécuté par un processeur d'un noeud de communication.

8. Support de stockage d'informations comprenant un produit programme d'ordinateur selon la revendication précédente.

## Patentansprüche

1. Verfahren zur Konfiguration von Funkressourcen (121, 161, 162, 171, 172), die in einer Vielzahl von Kommunikationsknoten (12, 16, 17) eines Kommunikationsnetzes (1) verteilt sind, das ein "Backhaul" genanntes Routing-Teilnetz und ein "Fronthaul" genanntes Benutzer-Teilnetz enthält, wobei das Fronthaul-Teilnetz ein drahtloses Netz ist, wobei jeder Kommunikationsknoten (12, 16, 17) eine oder mehrere Funkressourcen (121, 161, 162, 171, 172) enthält, wobei das Verfahren in einem Kommunikationsknoten (12, 16, 17) des Kommunikationsnetzes ausgeführt wird und **dadurch gekennzeichnet ist, dass** es enthält:
- Sammeln (S1), für jede der Funkressourcen (121, 161, 162, 171, 172), von Konfigurationsparametern und von mindestens einem Parameter, der für einen Empfangspegel eines von dieser Funkressource gesendeten oder empfangenen Signals repräsentativ ist,
- Erfassen (S2), ausgehend von den gesammelten Konfigurationsparametern von Funkressourcen und von dem mindestens einen der für einen Empfangspegel repräsentativen Parameter, eines gemeinsamen Konfigurationsparameterwerts und einer Nähe zwischen einer Funkressource (121) eines ersten Kommunikationsknotens (12) und einer Funkressource (171) eines zweiten Kommunikationsknotens (17) unter der Vielzahl von Kommunikationsknoten (12, 16, 17), die Störungen in den Kommunikationen zwischen den ersten (12) und zweiten (17) Kommunikationsknoten (12, 16, 17) erzeugen kann, wobei die Nähe erfasst wird, sobald der Empfangsleistungspegel eines von der Funkressource des ersten Kommunikationsknotens gesendeten und von der Funkressource des zweiten Kommunikationsknotens empfangenen Signals oder eines von der Funkressource des zweiten Kommunikationsknotens gesendeten und von der Funkressource des ersten Kommunikationsknotens empfangenen Signals höher als eine vorbestimmte Schwelle ist, wobei die Funkressourcen (121, 171) der ersten (12) und zweiten (17) Kommunikationsknoten konfiguriert sind, Übertragungen durch eine drahtlose Verbindung (14) im Backhaul genannten Routing-Teilnetz durchzuführen,
- Konfigurieren (S3) mindestens der einen gemeinsamen Konfigurationsparameterwert aufweisenden Funkressource des zweiten Kommunikationsknotens (17) mit einer neuen Konfiguration, wobei der gemeinsame Wert des Konfigurationsparameters nicht in der neuen Konfiguration enthalten und die zweite Funkressource (171) konfiguriert ist, nach dem Konfigurationsschritt (S3) Übertragungen im Fronthaul-Teilnetz durchzuführen,
- Erfassen mindestens einer Drahtverbindung (13) zwischen den ersten (12) und zweiten (17) Kommunikationsknoten, die fähig ist, die drahtlose Verbindung (14) für Kommunikationen im Backhaul-Routing-Teilnetz zu ersetzen, damit die von der drahtlosen Verbindung (14) zwischen den ersten (12) und zweiten (17) Kommunikationsknoten durchgeführten Kommunikationen nach dem Konfigurationsschritt (S3) von der Drahtverbindung (13) durchgeführt werden.

2. Verfahren zur Konfiguration von Funkressourcen (121, 161, 162, 171, 172) nach dem vorhergehenden Anspruch, wobei der Schritt der Erfassung einer Drahtverbindung (13) einen Austausch von Nachrichten zwischen den ersten (12) und zweiten (17) Knotenvorrichtungen über Schnittstellen enthält, die konfiguriert sind, durch mindestens eine Drahtverbindung (13) angeschlossen zu werden.

3. Verfahren zur Konfiguration von Funkressourcen (121, 161, 162, 171, 172) nach einem der vorhergehenden Ansprüche, wobei der mindestens eine für einen Empfangspegel repräsentative Parameter ein RSSI genannter Empfangsleistungspegel eines von einer Antenne eines Kommunikationsknotens kommenden Signals ist.

4. Verfahren zur Konfiguration von Funkressourcen (121, 161, 162, 171, 172) nach einem der vorhergehenden Ansprüche, wobei der mindestens eine einen gemeinsamen Wert zwischen zwei Kommunikationsknoten aufweisende Konfigurationsparameter sich in der Gruppe: ein SSID, ein BSSID, ein Frequenzband, ein Kanal, ein Durchlassband befindet.

5. Kommunikationsknotenvorrichtung (12, 16, 17), die konfiguriert ist, Übertragungen mit einer Vielzahl von Kommunikationsknoten (12, 16, 17) eines Kommunikationsnetzes (1) durchzuführen, das ein "Backhaul" genanntes Routing-Teilnetz und ein "Fronthaul" genanntes Benutzer-Teilnetz enthält, wobei das Fronthaul-Teilnetz ein drahtloses Netz ist, und eine oder mehrere Funkressourcen (121, 161, 162, 171, 172) zu konfigurieren, die in der Vielzahl von Kommunikationsknoten (12, 16, 17) verteilt sind, wobei jede Kommunikationsknotenvorrichtung (12, 16, 17) eine oder mehrere Funkressourcen enthält, wobei die Kommunikationsknotenvorrichtung (12, 16, 17) konfiguriert ist, um:
- für jede der Funkressourcen (121, 161, 162, 171, 172) Konfigurationsparameter und mindestens einen Parameter zu sammeln (S1), der für einen Empfangspegel eines von dieser Funkressource gesendeten oder empfangenen Signals repräsentativ ist,
- ausgehend von den gesammelten Konfigurationsparametern von Funkressourcen und von dem mindestens einen der für einen Empfangspegel repräsentativen Parameter einen gemeinsamen Konfigurationsparameterwert und eine Nähe zwischen einer Funkressource (121, 161, 162, 171, 172) eines ersten Kommunikationsknotens (12,) und einer Funkressource (121, 161, 162, 171, 172) eines zweiten Kommunikationsknotens (17) unter der Vielzahl von Kommunikationsknoten (12, 16, 17) zu erfassen (S2), die Störungen in den Kommunikationen zwischen den ersten und zweiten Kommunikationsknoten (12, 16, 17) erzeugen kann, wobei die Nähe erfasst wird, sobald der Empfangsleistungspegel eines von der Funkressource des ersten Kommunikationsknotens gesendeten und von der Funkressource des zweiten Kommunikationsknotens empfangenen Signals oder eines von der Funkressource des zweiten Kommunikationsknotens gesendeten und von der Funkressource des ersten Kommunikationsknotens empfangenen Signals höher als eine vorbestimmte Schwelle ist, wobei die Funkressourcen (121, 171) der ersten (12) und zweiten (17) Kommunikationsknoten konfiguriert sind, Übertragungen durch eine drahtlose Verbindung (14) im Backhaul genannten Routing-Teilnetz durchzuführen,
- mindestens eine Funkressource (121, 161, 162, 171, 172) des zweiten Kommunikationsknotens mit einer neuen Konfiguration zu konfigurieren (S3), wobei der gemeinsame Wert des Konfigurationsparameters nicht in der neuen Konfiguration enthalten und die zweite Funkressource (171) konfiguriert ist, nach dem Konfigurationsschritt (S3) Übertragungen im Fronthaul-Teilnetz durchzuführen,
- mindestens eine Drahtverbindung (13) zu erfassen, die fähig ist, die drahtlose Verbindung (14) für Kommunikationen im Backhaul-Routing-Teilnetz zwischen den ersten (12) und zweiten (17) Kommunikationsknoten zu ersetzen, damit die von der drahtlosen Verbindung (14) zwischen den ersten (12) und zweiten (17) Kommunikationsknoten durchgeführten Kommunikationen nach dem Konfigurationsschritt (S3) von der Drahtverbindung (13) durchgeführt werden.

6. Drahtloses Kommunikationsnetz (1), das eine Vielzahl von Kommunikationsknoten (12, 16, 17) nach Anspruch 5 enthält.

7. Computerprogrammprodukt, **dadurch gekennzeichnet, dass** es Programmcodeanweisungen enthält, um die Schritte des Verfahrens nach einem der Ansprüche 1 bis 4 auszuführen, wenn das Programm von einem Prozessor eines Kommunikationsknotens ausgeführt wird.

8. Informationsspeicherträger, der ein Computerprogrammprodukt nach dem vorhergehenden Anspruch enthält.

## Claims

1. Method for configuring radio resources (121, 161, 162, 171, 172) distributed in a plurality of communication nodes (12, 16, 17) of a communication network (1) comprising a so-called backhaul subnetwork and a so-called fronthaul user network, the fronthaul subnetwork being a wireless network, each communication node (12, 16, 17) comprising one or more radio resources (121, 161, 162, 171, 172), the method being executed in a communication node (12, 16, 17) of said communication network, and being **characterised in that** it comprises:
- collecting (S1), for each of said radio resources (121, 161, 162, 171, 172), configuration parameters, and at least one parameter representing a reception level of a signal sent or received by this radio resource,
- detecting (S2), from said collected radio-resource configuration parameters, and from at least one of said parameters representing a reception level, a common configuration parameter value and a proximity between a radio resource (121) of a first communication node (12) and a radio resource (171) of a second communication node (17) from said plurality of communication nodes (12, 16, 17), of such a nature as to cause interference in the communications between the first (12) and second (17) communication nodes (12, 16, 17), said proximity being detected as soon as the reception power level of a signal sent by the radio resource of the first communication node and received by the radio resource of the second communication node or of a signal sent by the radio resource of the second communication node and received by the radio resource of the first communication node is above a predetermined threshold, said radio resources (121, 171) of the first (12) and second (17) communication nodes being configured for implementing transmissions by a wireless link (14) in the so-called backhaul subnetwork,
- configuring (S3) at least the radio resource of the second communication node (17) having a common configuration parameter value with a new configuration, said value of said common configuration parameter being absent from the new configuration and said second radio resource (171) being configured for implementing transmissions in the fronthaul subnetwork after said configuration step (S3),
- detecting at least one cable link (13) between the first (12) and second (17) communication nodes able to be substituted for the wireless link (14) for communications in the backhaul subnetwork, so that said communications made by the wireless link (14) between the first (12) and second (17) communication nodes are made by the cable link (13) after the reconfiguration step (S3).

2. Method for configuring radio resources (121, 161, 162, 171, 172) according to the preceding claim, wherein the step of detecting a cable link (13) comprises an exchange of messages between the first (12) and second (17) node devices via interfaces configured for being connected by at least one cable link (13).

3. Method for configuring radio resources (121, 161, 162, 171, 172) according to either one of the preceding claims, wherein the at least one parameter representing a reception level is a so-called RSSI reception power level of a signal coming from an antenna of a communication mode.

4. Method for configuring radio resources (121, 161, 162, 171, 172) according to any one of the preceding claims, wherein the at least one configuration parameter having a common value between two communication modes is from the group: an SSID, a BSSID, a frequency band, a channel or a bandwidth.

5. Communication node device (12, 16, 17) configured for making transmissions with a plurality of communication nodes (12, 16, 17) of a communication network (1) comprising a so-called backhaul subnetwork and a so-called fronthaul user network, the fronthaul subnetwork being a wireless network, and for configuring one or more radio resources (121, 161, 162, 171, 172) distributed in said plurality of communication nodes (12, 16, 17), each communication node device (12, 16, 17) comprising one or more radio resources, the communication node device (12, 16, 17) being configured for:
- collecting (S1), for each of said radio resources (121, 161, 162, 171, 172), configuration parameters, and at least one parameter representing a reception level of a signal sent or received by this radio resource,
- detecting (S2), from said collected radio-resource configuration parameters, and from at least one of said parameters representing a reception level, a common configuration parameter value and a proximity between a radio resource (121, 161, 162, 171, 172) of a first communication node (12) and a radio resource (121, 161, 162, 171, 172) of a second communication node (17) from said plurality of communication nodes (12, 16, 17), of such a nature as to cause interference in the communications between the first and second communication nodes (12, 16, 17), said proximity being detected as soon as the reception power level of a signal sent by the radio resource of the first communication node and received by the radio resource of the second communication node or of a signal sent by the radio resource of the second communication node and received by the radio resource of the first communication node is above a predetermined threshold, said radio resources (121, 171) of the first (12) and second (17) communication nodes being configured for implementing transmissions in the so-called backhaul subnetwork,
- configuring (S3) at least one radio resource (121, 161, 162, 171, 172) of the second communication node with a new configuration, said common value of said configuration parameter being absent from the new configuration and said second radio resource (171) being configured for implementing transmissions in the fronthaul subnetwork after said configuration step (S3),
- detecting at least one cable link (13) able to be substituted for the wireless link (14) for communications in the backhaul subnetwork, between the first (12) and second (17) communication nodes so that communications made by the wireless link (14) between the first (12) and second (17) communication nodes are made by the cable link (13) after the reconfiguration step (S3).

6. Wireless communication network (1) comprising a plurality of communication nodes (12, 16, 17) according to claim 5.

7. Computer program product, **characterised in that** it comprises program code instructions for performing the steps of the method according to any one of claims 1 to 4, when said program is executed by a processor of a communication node.

8. Information storage medium comprising a computer program product according to the preceding claim.
